(19) Europäisches Patentamt
European Patent Office
Office européen des brevets

(11) Veröffentlichungsnummer : **0 496 773 B1**

(12) **EUROPÄISCHE PATENTSCHRIFT**

(45) Veröffentlichungstag der Patentschrift :
**27.04.94 Patentblatt 94/17**

(51) Int. Cl.$^5$ : **D21C 5/02**

(21) Anmeldenummer : **90915459.3**

(22) Anmeldetag : **10.10.90**

(86) Internationale Anmeldenummer :
**PCT/EP90/01698**

(87) Internationale Veröffentlichungsnummer :
**WO 91/05906 02.05.91 Gazette 91/10**

(54) **WÄSSRIGE, CARBONSÄUREN UND/ODER HARZSÄUREN ENTHALTENDE DISPERSIONEN ZUM DEINKEN VON BEDRUCKTEN ALTPAPIEREN.**

Die Akte enthält technische Angaben, die nach dem Eingang der Anmeldung eingereicht wurden und die nicht in dieser Patentschrift enthalten sind.

(30) Priorität : **19.10.89 DE 3934882**

(43) Veröffentlichungstag der Anmeldung :
**05.08.92 Patentblatt 92/32**

(45) Bekanntmachung des Hinweises auf die Patenterteilung :
**27.04.94 Patentblatt 94/17**

(84) Benannte Vertragsstaaten :
**AT CH DE FR GB GR LI LU SE**

(56) Entgegenhaltungen :
**EP-A- 0 067 333**
**EP-A- 0 256 354**
**EP-A- 0 307 024**
**DE-A- 1 517 172**

(73) Patentinhaber : **Chemische Fabrik Grünau GmbH**
**Robert-Hansen-Strasse 1 Postfach 1063**
**D-89251 Illertissen (DE)**

(72) Erfinder : **SMOLKA, Heinz-Gerd**
**Reichenberger Strasse 4**
**D-7918 Illertissen (DE)**
Erfinder : **LEHMANN, Klaus**
**Krautgarten 10**
**D-7918 Illertissen (DE)**
Erfinder : **HAWEL, Hans**
**Keltenweg 2**
**D-7917 Vöhringen (DE)**
Erfinder : **SCHRAML, Dieter**
**Komotauerstrasse 20**
**D-7918 Illertissen (DE)**
Erfinder : **HORNFECK, Klaus**
**August-Burberg-Strasse 34**
**D-4020 Mettmann (DE)**

(74) Vertreter : **Wilk, Hans Christof, Dr.**
**c/o Henkel KGaA TFP/Patentabteilung**
**D-40191 Düsseldorf (DE)**

## Beschreibung

Die Erfindung betrifft wäßrige, Carbonsäuren und/oder Harzsäuren enthaltende Dispersionen zum Deinken von bedruckten Altpapieren sowie die Verwendung von wäßrigen Dispersionen enthaltend A. $C_{6-22}$-Carbonsäuren und/oder Harzsäuren und B. $C_{6-22}$-Oxoalkohole, alkoxyliert mit 2 bis kleiner 6 Mol $C_{2-4}$-Alkylenoxiden, zum Deinken von bedruckten Altpapieren.

Zur Herstellung von beispielsweise Zeitungsdruck- und Hygienepapieren werden heute in großen Mengen Altpapiere eingesetzt. Die Qualität dieser Papiersorten wird von deren Helligkeit und Farbe bestimmt. Um qualitativ hochwertige Papiersorten herstellen zu können, müssen die Druckfarben aus den bedruckten Altpapieren entfernt werden. Dies geschieht üblicherweise mittels Deinking-Verfahren, die im wesentlichen in zwei Teilschritten ablaufen:

1. Aufschlagen der Altpapiere, das heißt Zerfasern in Wasser bei gleichzeitigem Einwirken, der für die Ablösung der Druckfarbenteilchen benötigten Chemikalien und

2. Ausscheidung der abgelösten Druckfarbenteilchen aus den Papierstoffsuspensionen.

Der zweite Verfahrensschritt kann durch Auswaschen oder Flotation erfolgen (Ullmann's Enzyklopädie der Technischen Chemie, 4. Auflage, Band 17, Seiten 570-571 (1979)). Bei der Flotation, bei der die unterschiedliche Benetzbarkeit von Druckfarben und Papierfasern ausgenutzt wird, wird Luft durch die Papierstoffsuspensionen gedrückt oder gesaugt. Dabei verbinden sich kleine Luftbläschen mit den Druckfarbenteilchen und bilden an der Wasseroberfläche einen Schaum, der mit Stoffängern entfernt wird.

Üblicherweise wird das Deinken von Altpapieren bei alkalischen pH-Werten in Gegenwart von Alkalihydroxiden, Alkalisilikaten, oxidativ wirkenden Bleichmitteln und oberflächenaktiven Substanzen bei Temperaturen zwischen 30 und 50 °C durchgeführt. Als oberflächenaktive Substanzen, die das Ablösen, Trennen und Sammeln der Druckfarbenteilchen bewirken, werden überwiegend Seifen und/oder Fettalkoholpolyglycolether eingesetzt.

Aus der DE-C-15 17 172 is bekannt, daß gute Deinking-Ergebnisse erhalten werden, wenn Fettsäuren in Verfahren zum Entfärben von Altpapieren eingesetzt werden. Fettsäuren und insbesondere gesättigte Fettsäuren lassen sich jedoch in der alkalischen Flotte des Stofflösers nur grob dispergieren und werden nur teilweise verseift, so daß beim Deinken nur ein Teil der Fettsäuren wirksam ist. In der Vergangenheit hat es daher nicht an Versuchen gefehlt, die beim Einsatz von Fettsäuren bei der Altpapieraufbereitung auftretenden Nachteile zu vermindern. So ist beispielsweise aus der DE-C-31 23 353 ein Verfahren zum Deinken von bedruckten Altpapieren bekannt, bei dem Fettsäuren und/oder Harzsäuren und Dispergiermittel in Form einer Öl-in-Wasser-Emulsion eingesetzt werden. Als Dispergiermittel werden anionische und/oder nichtionische Tenside, beispielsweise Alkali- und/oder Aminsalze von Fettalkoholpolyglycolethersulfaten, Fettsäurepolyglycolester und/oder Fettalkoholpolyglycolether genannt. Ferner ist aus der DE-A-37 29 446 bekannt, daß sich wäßrige Fettsäuredispersionen, die Mono- und/oder Diester mehrwertiger Alkohole und anionische Tenside enthalten, zum Deinken von Altpapieren eignen. Als Fettsäuren werden gesättigte Fettsäuren und als Mono- und/oder Diester Glycerinmono- und/oder Glycerindiester von gesättigten Carbonsäuren, Isopropylstearat und/oder Isopropylpalmitat eingesetzt.

Obwohl die Dispergierung und Verseifung von Fettsäuren, die in Form wäßriger Dispersionen zusammen mit nichtionischen und/oder anionischen Dispergiermitteln eingesetzt werden, im Vergleich zu reinen Fettsäuren verbessert wird, sind die erzielten Verbesserungen in vielen Fällen noch nicht zufriedenstellend. Insbesondere bilden die bekannten Fettsäure-Dispersionen in der Flotation Druckfarben enthaltende Schäume mit so hohen Stabilitäten, daß die Mitverwendung von Entschäumern in Papierstoffsuspensionen erforderlich ist.

Die der Erfindung zugrundeliegende Aufgabe bestand darin, wäßrige, feinteilige, lagerstabile Fettsäuredispersionen zu entwickeln, die eine schnelle Verseifung der Fettsäuren in Papierstoffsuspensionen bewirken und die in der Flotation Schäume bilden, deren Stabilitäten den Einsatz von Entschäumern überflüssig macht.

Es wurde nun gefunden, daß die an die zu entwickelnden Fettsäuredispersionen gestellten hohen Anforderungen von Dispersionen erfüllt werden, die $C_{6-22}$-Carbonsäuren und/oder Harzsäuren in Kombination mit alkoxylierten $C_{6-22}$-Oxoalkoholen mit Alkoxylierungsgraden zwischen 2 und kleiner 6 enthalten.

Gegenstand der Erfindung sind dementsprechend wäßrige, Carbonsäuren und/oder Harzsäuren enthaltende Dispersionen zum Deinken von bedruckten Altpapieren, welche dadurch gekennzeichnet sind, daß die Dispersionen

A. $C_{6-22}$-Carbonsäuren und/oder Harzsäuren und

B. $C_{6-22}$-Oxoalkohole, alkoxyliert mit 2 bis kleiner 6 Mol $C_{2-4}$-Alkylenoxiden

enthalten.

Ferner ist Erfindungsgegenstand die Verwendung von wäßrigen Dispersionen, die

A. $C_{6-22}$-Carbonsäuren und/oder Harzsäuren und

2

B. C$_{6-22}$-Oxoalkohole, alkoxyliert mit 2 bis kleiner 6 Mol C$_{2-4}$-Alkylenoxiden

enthalten, zum Deinken von bedruckten Altpapieren.

Geeignete C$_{6-22}$-Carbonsäuren und/oder Harzsäuren können gesättigt und/oder ungesättigt, OH-gruppenhaltig und/oder OH-gruppenfrei, linear, verzweigtkettig und/oder cyclisch sein. C$_{6-22}$-Carbonsäuren sind vorzugsweise aliphatisch. Harzsäuren können aliphatisch oder aromatisch sein und ein oder mehrere Säurefunktionen enthalten. Capronsäure, Caprinsäure, Laurinsäure, Myristinsäure, Palmitinsäure, Stearinsäure, Ölsäure, Rizinolsäure, Talgfettsäure, Palmölfettsäure, synthetisch hergestellte Fettsäuren mit 6 bis 22 C-Atomen, Abietinsäure, Agathensäure und/oder Illurinsäure sind Beispiele für Carbonsäuren und/oder Harzsäuren, die erfindungsgemäß in wäßrigen Dispersionen eingesetzt werden können. Vorzugsweise werden aliphatische Carbonsäuren natürlichen und/oder synthetischen Ursprungs mit 12 bis 18 C-Atomen eingesetzt.

Die in den erfindungsgemäß einzusetzenden wäßrigen Dispersionen enthaltenen alkoxylierten Oxoalkohole sind durch Oxosynthese zugänglich (Kirk-Othmer: "Encyclopedia of Chemical Techonology", Band 1, Seiten 747 bis 751 (1978)). Als Edukte werden Olefine eingesetzt, die mit Kohlenmonoxid und Wasserstoff in Gegenwart von Katalysatoren, beispielsweise Cobalt-Katalysatoren, bei Temperaturen zwischen 50 und 200 °C und Drücken zwischen 20,2 und 30,3 mPa zu Aldehyden umgesetzt werden. Die erhaltenen Aldehyde, die gegenüber den eingesetzten Olefinen ein Kohlenstofatom mehr haben, werden anschließend durch Hydrierung zu den entsprechenden primären Alkoholen (Oxoalkohole) reduziert. Werden lineare Olefine als Ausgangsstoffe eingesetzt, werden Gemische aus gerad- und verzweigtkettigen Alkoholen erhalten. Werden dagegen verzweigtkettige Olefine eingesetzt, werden ausschließlich verzweigtkettige Alkohole erhalten. Erfindungsgemäß können verzweigtkettige C$_{6-22}$-Oxoalkohole alleine oder in Kombination mit linearen C$_{6-22}$-Oxoalkohlen eingesetzt werden. Oxoalkohle mit 6 bis 13 C-Atomen werden bevorzugt. Die Alkoxylierung der Oxoalkohole mit C$_{2-4}$-Alkylenoxiden, vorzugsweise mit Ethylenoxid und/oder Propylenoxid wird nach bekannten großtechnischen Verfahren durchgeführt (siehe beispielsweise in "Chemische Technologie" Band 7, Seite 131-132, Carl-Hanser-Verlag, München-Wien (1986)). Der mittlere Alkoxylierungsgrad entspricht der molaren Menge der angelagerten Alkylenoxide und liegt zwischen 2 und kleiner 6, vorzugsweise zwischen 3 und 5.

Die erfindungsgemäß einzusetzenden wäßrigen Dispersionen enthalten vorzugsweise 10 bis 60 Gew.-%, besonders bevorzugt 20 bis 45 Gew.-% der Komponenten A. und vorzugsweise 0,1 bis 6 Gew.-%, besonders bevorzugt 0,1 bis 2,5 Gew.% alkoxylierte Oxoalkohole.

Die Dispersionen können als fakultative Bestandteile anorganische Verbindungen, wie Kaoline, Talkum, Calciumcarbonat und/oder Alkali- und/oder Erdalkalialuminiumsilikate der allgemeinen Formel I

$$0,7 - 1,5 \; \text{Kat}_{2/n}O \cdot Al_2O_3 \cdot 0,8 - 6 \; SiO_2$$

in der Kat Alkali- und/oder Erdalkalimetallkationen und n die Wertigkeit der Metallkationen bedeuten, beispielsweise Zeolith A, in Mengen von 0,5 bis 20 Gew.-%, sowie nichtionische und/oder anionische Tenside in Mengen von 0,25 bis 25 Gew.-% enthalten. Werden anionische Tenside eingesetzt, so liegt deren Gehalt in den Dispersionen zwischen 1 und 10 Gew.-%, bezogen auf den Carbonsäure- und/oder Harzsäuregehalt.

Als nichtionische Tenside können beispielsweise Alkylpolyglycolether, Hydroxyalkylpolyglycolether, Alkenylpolyglycolether, Alkarylpolyglycolether, Acylpolyglycolester und/oder Polyoxyethylenglycerinfettsäureester mit jeweils 8 bis 22 C-Atomen in den gerad- oder verzweigtkettigen oder cyclischen Kohlenwasserstoffresten und 6 bis 100 Mol Ethylenoxid eingesetzt werden. Geeignete anionische Tenside sind beispielsweise Alkali- und/oder Aminsalze von Alkylsulfaten, Alkylpolyglycolethersulfaten, Alkylarylpolyglycolethersulfaten, Alkylsulfonaten, Alkylarylsulfonaten und/oder Eiweißfettsäurekondensaten. Die genannten anionischen Tenside besitzen in den Kohlenwasserstoffresten 8 bis 22 C-Atome. Der mittlere Alkoxylierungsgrad der Ethersulfate liegt zwischen 1 und 30.

Die erfindungsgemäß einzusetzenden Dispersionen sind in an sich bekannter Weise herstellbar, in dem Mischungen aus a) Carbonsäuren und/oder Harzsäuren und b) alkoxylierten Oxoalkoholen bei 65 bis 90 °C hergestellt werden. Vorzugsweise enthalten diese Mischungen 1 bis 20 Gew.-% Wasser. Ferner können sie als fakultative Bestandteile anorganische Verbindungen enthalten. Die erhaltenen Dispersionen enthalten die gesamte Menge oder nur einen Teil der in den herzustellenden Dispersionen enthaltenen Menge an alkoxylierten Oxoalkoholen. Die 65 bis 90 °C warmen fettsäurehaltigen Dispersionen werden unter Rühren zu 20 bis 60 °C warmem Wasser oder zu 20 bis 60 °C warmen wäßrigen Mischungen, die anionische und/oder nichtionische Tenside und/oder alkoxylierte Oxoalkohole enthalten, gegeben. Anschließend werden die erhaltenen Dispersionen unter Rühren auf Temperaturen zwischen 15 und 25 °C abgekühlt und bei dieser Temperatur in an sich bekannter Weise nachhomogenisiert.

In den erfindungsgemäß einzusetzenden Dispersionen sind die Carbonsäuren und/oder Harzsäuren sehr fein verteilt, so daß diese sehr schnell und vollständig verseift werden. Die Dispersionen zeichnen sich durch hohe Lagerstabilitäten aus.

Die erfindungsgemäß einzusetzenden wäßrigen Dispersionen werden Papierstoffsuspensionen vorzugsweise in Mengen von 0,2 bis 2,0 Gew.-%, besonders bevorzugt von 0,2 bis 1,5 Gew.-%, jeweils bezogen auf lufttrockenen Papierstoff, zugesetzt. Lufttrockener Papierstoff bedeutet, daß sich im Papierstoff ein Gleichgewichtszustand an innerer Feuchte eingestellt hat. Dieser Gleichgewichtszustand hängt von der Temperatur und von der relativen Feuchte der Luft ab.

In Gegenwart erfindungsgemäßer wäßriger Dispersionen lassen sich Druckfarben unterschiedlicher chemischer Zusammensetzungen, beispielsweise Zeitungsrotationsfarben, Buchdruckfarben, Off-Set-Druckfarben, Illustrationstiefdruckfarben, Flexodruckfarben, Laserdruckfarben und/oder Verpackungstiefdruckfarben aus bedruckten Altpapieren, beispielsweise Zeitungen, Illustrierten, Computerpapieren, Zeitschriften, Broschüren, Formulare, Telefonbücher und/oder Katalogen entfernen.

Bedruckte Altpapiere werden bei einer Stoffdichte beispielsweise zwischen 1 und 15 Gew.-% in einem Stofflöser in wäßriger Lösung, die typischerweise 0,5 bis 3,0 Gew.-% 100 %iges Wasserstoffperoxid, 0,5 bis 2,5 Gew.-% Natriumhydroxid (100 Gew.-%ig), 2,0 bis 5,0 Gew.-% Natronwasserglas (Gewichtsverhältnis $SiO_2$ zu $Na_2O$ = 3,3 : 1, Feststoffgehalt: 35 Gew.-%), 0,2 bis 2,0 Gew.-% erfindungsgemäße wäßrige Dispersionen und 0,1 bis 0,3 Gew.-% Komplexbildner - alle Gew.-%-Angaben beziehen sich auf lufttrockenes Altpapier - enthält, bei Temperaturen zwischen 20 und 60 °C zerkleinert. Nach einer Verweilzeit von 1 bis 3 Stunden bei Temperaturen zwischen 20 und 60 °C werden die Papierstoffsuspensionen in Wasser eingerührt oder mit Wasser versetzt, so daß 0,8 bis 2 gew.-%ige Papierstoffsuspensionen erhalten werden. Nach Entfernen der in den Papierstoffsuspensionen enthaltenen groben, nicht flotierbaren Bestandteile werden die abgelösten Druckfarbenteilchen in an sich bekannter Weise durch Flotation aus den Papierstoffsuspensionen ausgeschieden.

Altpapiere, die in Gegenwart erfindungsgemäßer wäßriger Dispersionen deinkt werden, zeichnen sich durch sehr hohe Weißgrade aus. Die erfindungsgemäßen Dispersionen bilden während der Flotation Druckfarben enthaltende Schäume, die - unabhängig von den eingesetzten Altpapieren und im Vergleich zu Schäumen von üblicherweise eingesetzten carbonsäure- und/oder harzsäurehaltigen Dispersionen - wesentlich weniger stabil sind, so daß die erfindungsgemäßen Dispersionen ohne Zusatz von Entschäumern eingesetzt werden können.

**Beispiele**

Die Angabe "Teile" bedeutet "Gewichtsteile".
Die Viskositäten wurden an einem Brookfieldviskosimeter gemessen.

Herstellung erfindungsgemäßer Dispersionen

Dispersion A

In einem heiz- und kühlbaren, mit einem Kreuzpropellerrührwerk und mit einem heizbaren Zulaufgefäß versehenen Reaktionsgefäß wurden 576 Teile Wasser auf 70 °C aufgeheizt und unter Rühren 50 Teile n-Octadecanol · 20 Mol Ethylenoxid (EO) gegeben. Anschließend wurde die homogene Mischung auf 30 °C abgekühlt. In das Zulaufgefäß, das mit einem Kreuzpropellerrührwerk versehen war, wurden 300 Teile tierische $C_{12-18}$-Fettsäure, 10 Teile Isotridecylalkohol · 4 Mol EO und 64 Teile Wasser gegeben und unter Rühren bei 70 bis 80 °C vermischt. Danach wurde die 70 °C warme, fettsäurehaltige Mischung unter Rühren zu der wäßrigen Mischung gegeben. Nach beendeter Zugabe wurde auf 18 bis 20 °C abgekühlt und nachhomogenisiert.

Es wurde eine 36 gew.-%ige, dünnflüssige, sehr feine, leicht blau-stichige Dispersion erhalten, die auch nach dreimonatiger Standzeit bei Raumtemperatur (15 - 25 °C) keine Separationserscheinungen zeigte. Die Viskosität bei 20 °C betrug 180 mPa · s.

Dispersion B

Analog der Herstellung von Dispersion A wurde eine wäßrige, homogene Mischung aus 603 Teilen Wasser und 25 Teilen n-Octadecanol · 20 Mol EO, sowie eine fettsäurehaltige Mischung aus 300 Teilen tierischer $C_{12-18}$-Fettsäure, 5 Teilen Isotridecylalkohol · 4 Mol EO und 67 Teilen Wasser hergestellt. Die 70 °C warme, fettsäurehaltige Mischung wurde anschließend unter Rühren zu der 30 °C warmen, wäßrigen Mischung gegeben. Nach beendeter Zugabe wurde auf 18 bis 20 °C abgekühlt und nachhomogenisiert.

Es wurde eine 33 gew.-%ige, dünnflüssige, feinteilige Dispersion erhalten, die auch nach dreimonatiger Standzeit bei Raumtemperatur (15 - 25 °C) keine Separationserscheinungen zeigte. Die Viskosität bei 20 °C betrug 200 mPa · s.

4

## Dispersion C

Analog der Herstellung von Dispersion A wurde eine wäßrige, homogene Mischung aus 576 Teilen Wasser, 40 Teilen n-Octadecanol · 20 Mol EO und 10 Teilen Polyoxyethylenglycerin-$C_{16-18}$-Fettsäureester-20 EO sowie eine fettsäurehaltige Mischung aus 300 Teilen tierischer $C_{12-18}$-Fettsäure, 10 Teilen Isotridecylalkohol · 4 Mol EO und 64 Teilen Wasser hergestellt. Die 70 °C warme, fettsäurehaltige Mischung wurde anschließend unter Rühren zu der 30 °C warmen, wäßrigen Mischung gegeben. Nach beendeter Zugabe wurde auf 18 bis 20 °C abgekühlt und nachhomogenisiert.

Es wurde eine 36 gew.-%ige, dünnflüssige, sehr feine, leicht blau-stichige Dispersion erhalten, die auch nach dreimonatiger Standzeit bei Raumtemperatur (15 - 25 °C) keine Separationserscheinungen zeigte. Die Viskosität bei 20 °C betrug 220 mPa · s.

## Dispersion D

Analog der Herstellung von Dispersion A wurde eine wäßrige, homogene Mischung aus 520 Teilen Wasser und 45 Teilen n-Octadecanol · 20 Mol EO, sowie eine fettsäurehaltige Mischung aus 270 Teilen tierischer $C_{12-18}$-Fettsäure, 9 Teilen Isotridecylalkohol · 4 Mol EO, 100 Teilen Kaolin (technisch) und 56 Teilen Wasser hergestellt. Die 70 °C warme, fettsäurehaltige Mischung wurde anschließend unter Rühren zu der 30 °C warmen, wäßrigen Mischung gegeben. Nach beendeter Zugabe wurde auf 18 bis 20 °C abgekühlt und nachhomogenisiert.

Es wurde eine 42 gew.-%ige, dünnflüssige, feine, leicht blau-stichige Dispersion erhalten, die auch nach dreimonatiger Standzeit bei Raumtemperatur (15 - 25 °C) kein Separationserscheinungen zeigte. Die Viskosität bei 20 °C betrug 200 mPa · s.

## Dispersion E

Analog der Herstellung von Dispersion A wurde eine wäßrige, homogene Mischung aus 548 Teilen Wasser und 47,5 Teilen n-Octadecanol · 20 Mol EO, sowie eine fettsäurehaltige Mischung aus 285 Teilen tierischer $C_{12-18}$-Fettsäure, 9,5 Teilen Isotridecylalkohol · 4 Mol EO, 50 Teilen Kaolin (technisch) und 60 Teilen Wasser hergestellt. Die 70 °C warme, fettsäurehaltige Mischung wurde anschließend unter Rühren zu der 30 °C warmen, wäßrigen Mischung gegeben. Nach beendeter Zugabe wurde auf 18 bis 20 °C abgekühlt und nachhomogenisiert.

Es wurde eine 39 gew.-%ige, dünnflüssige, feine, leicht blau-stichige Dispersion erhalten, die auch nach dreimonatiger Standzeit bei Raumtemperatur (15 - 25 °C) keine Separationserscheinungen zeigte. Die Viskosität bei 20 °C betrug 220 mPa · s.

## Dispersion F

Analog der Herstellung von Dispersion A wurde eine wäßrige, homogene Mischung aus 576 Teilen Wasser, 40 Teilen n-Octadecanol · 20 Mol EO und 10 Teilen Eiweiß-$C_{12/14}$-fettsäurekondensat, Kaliumsalz sowie eine fettsäurehaltige Mischung aus 300 Teilen tierischer $C_{12-18}$-Fettsäure, 10 Teilen Isotridecylalkohol · 4 Mol EO und 64 Teilen Wasser hergestellt. Die 70 °C warme, fettsäurehaltige Mischung wurde anschließend unter Rühren zu der 30 °C warmen, wäßrigen Lösung gegeben. Nach beendeter Zugabe wurde auf 18 bis 20 °C abgekühlt und nachhomogenisiert.

Es wurde eine 36 gew.-%ige, dünnflüssige, sehr feine, leicht blau-stichige Dispersion erhalten, die auch nach dreimonatiger Standzeit bei Raumtemperatur (15 - 25 °C) keine Separationserscheinungen zeigte. Die Viskosität bei 20 °C betrug 200 mPa · s.

## Dispersion G

Analog der Herstellung von Dispersion A wurde eine wäßrige, homogene Mischung aus 576 Teilen Wasser, 40 Teilen n-Octadecanol · 20 Mol EO und 10 Teilen $C_{12-14}$-Alkylpolyglycolethersulfat-4 EO, Natriumsalz, sowie eine fettsäurehaltige Mischung aus 300 Teilen tierischer $C_{12-18}$-Fettsäure, 10 Teilen Isotridecylalkohol · 4 Mol EO und 64 Teilen Wasser hergestellt. Die 70 °C warme, fettsäurehaltige Mischung wurde anschließend unter Rühren zu der 30 °C warmen, wäßrigen Mischung gegeben. Nach beendeter Zugabe wurde auf 18 bis 20 °C abgekühlt und nachhomogenisiert.

Es wurde eine 36 gew.-%ige, dünnflüssige, sehr feine, leicht blau-stichige Dispersion erhalten, die auch nach dreimonatiger Standzeit bei Raumtemperatur (15 - 25 °C) keine Separationserscheinungen zeigte. Die Viskosität bei 20 °C betrug 200 mPa · s.

Dispersion H

Analog der Herstellung von Dispersion A wurde eine wäßrige, homogene Mischung aus 576 Teilen Wasser und 50 Teilen n-Octadecanol · 20 Mol EO, sowie eine fettsäurehaltige Emulsion aus 300 Teilen synthetisch hergestellter Fettsäure (Säurezahl 190 bis 200), 10 Teilen Isotridecylalkohol · 4 Mol EO und 64 Teilen Wasser hergestellt. Die 70 °C warme, fettsäurehaltige Emulsion wurde anschließend unter Rühren zu der 30 °C warmen, wäßrigen Mischung gegeben. Nach beendeter Zugabe wurde auf 18 bis 20 °C abgekühlt und nachhomogenisiert.

Es wurde eine 36 gew.-%ige, dünnflüssige, sehr feine, leicht blau-stichige Dispersion erhalten, die auch nach dreimonatiger Standzeit bei Raumtemperatur (15 - 25 °C) keine Separationserscheinungen zeigte. Die Viskosität bei 20 °C betrug 240 mPa · s.

Anwendungsbeispiele

110 g lutro (= 100 g atro) bedrucktes Altpapier (lutro = lufttrocken, atro = absolut trocken) aus 50 Gew.-% Tageszeitungen und 50 Gew.-% Illustrierten wurden bei 5 Gew.-% Stoffdichte mit 1890 ml einer wäßrigen Lösung, enthaltend - bezogen auf lufttrockenes Altpapier -

| 1 Gew.-% | Natriumhydroxid (100 Gew.-%ig) |
| 3,0 Gew.-% | Natronwasserglas (Gewichtsverhältnis $SiO_2$ zu $Na_2O$ = 3,3 : 1; Feststoffgehalt 35 Gew.-%) |
| 0,2 Gew.-% | einer 40 gew.-%igen wäßrigen Lösung von Diethylentriaminpentaessigsäure-Natriumsalz |
| 0,85 Gew.-% | Wasserstoffperoxid (100 Gew.-%ig) und |
| 0,7 Gew.-% | erfindungsgemäße wäßrige Dispersion |

bei 45 °C mittels Dispergierscheibe (2500 Umdrehungen/Minuten) 15 Minuten aufgeschlagen. Der Härtegrad des verwendeten Wassers lag bei 17 ° deutscher Härte (dH). Nach 2 Stunden bei 45 °C wurden die Papierstoffsuspensionen mit 4 l Wasser von 17 °dH verdünnt und in einem Entstipper die in Papierstoffsuspensionen enthaltenen groben, nicht flotierbaren Anteile in 5 Minuten entfernt. Anschließend wurden die entstippten Papierstoffsuspensionen in einer Laborflotationszelle mit Wasser obigen Härtegrades bis zur Höhe des Schaumüberlaufes der Zelle aufgefüllt und anschließend 10 Minuten flotiert, wobei durch Zugabe von Wasser das Niveau in Höhe des Schaumüberlaufes konstant gehalten wurde. Die erhaltenen Papierstoffsuspensionen wurden anschließend auf 20 Gew.-% Stoffdichte eingedickt und durch Zugabe von 800 ml Wasser von 17 °dH auf eine Stoffdichte von 4 Gew.-% verdünnt, aufgeschlagen und mit verdünnter Schwefelsäure auf einen pH-Wert von 6 angesäuert.

Von diesen Papierstoffsuspensionen wurden dann 100 g mit Wasser auf 500 ml aufgefüllt (Stoffdichte: 0,8 Gew.-%) und über ein Filterblatt (Durchmesser 12 cm) abgenutscht. Das so entstandene Papierblatt wurde nach der Glättung getrocknet und der Weißgrad nach Elrepho R 457 gemessen.
Die Ergebnisse sind in Tabelle 1 zusammengefaßt.

**Tabelle 1**

| eingesetzte Dispersionen | Weißgrad R 457 (in %) |
|---|---|
| A | 51,4 |
| B | 50,8 |
| C | 51,2 |
| D | 51,0 |
| E | 51,2 |
| F | 51,6 |
| G | 50,9 |
| H | 51,5 |

zum Vergleich:

| handelsübliche, fettsäure-haltige Dispersion | 51,1 |
|---|---|

Im Vergleich zu der handelsüblichen, fettsäurehaltigen Dispersion wurden mit den erfindungsgemäßen Dispersionen gleichwertige Deinking-Ergebnisse erzielt. Der wesentliche Vorteil der erfindungsgemäßen Dispersion lag darin, daß die Stabilitäten der während der Flotation entstandenen druckfarbenhaltigen Schäume gegenüber dem druckfarbenhaltigen Schaum der handelsüblichen fettsäurehaltigen Dispersion wesentlich geringer waren, so daß den Papierstoffsuspensionen keine Entschäumer zugesetzt werden mußten.

**Patentansprüche**

1. Wäßrige, Carbonsäuren und/oder Harzsäuren enthaltende Dispersionen zum Deinken von bedruckten Altpapieren, dadurch gekennzeichnet, daß die Dispersionen

   A. $C_{6-22}$-Carbonsäuren und/oder Harzsäuren und

   B. $C_{6-22}$-Oxoalkohole, die mit 2 bis kleiner 6 Mol $C_{2-4}$-Alkylenoxiden alkoxyliert sind,

   enthalten.

2. Dispersionen nach Anspruch 1, dadurch gekennzeichnet, daß die Dispersionen aliphatische Carbonsäuren mit 12 bis 18 C-Atomen enthalten.

3. Dispersionen nach einem oder beiden der Ansprüche 1 bis 2, dadurch gekennzeichnet, daß die Dispersionen $C_{6-13}$-Oxoalkohole, die mit 3 bis 5 Mol Ethylenoxid und/oder Propylenoxid alkoxyliert sind, enthalten.

4. Dispersionen nach einem oder mehreren der Ansprüche 1 bis 3, dadurch gekennzeichnet, daß die Dispersionen 10 bis 60 Gew.-%, vorzugsweise 20 bis 45 Gew.-% der Komponenten A und 0,1 bis 6 Gew.-%, vorzugsweise 0,1 bis 2,5 Gew.-% der Komponenten B enthalten.

5. Verwendung von wäßrigen Dispersionen enthaltend

   A. $C_{6-22}$-Carbonsäuren und/oder Harzsäuren und

   B. $C_{6-22}$-Oxoalkohole, die mit 2 bis kleiner 6 Mol $C_{2-4}$-Alkylenoxiden alkoxyliert sind,

   zum Deinken von bedruckten Altpapieren.

6. Verwendung nach Anspruch 5, dadurch gekennzeichnet, daß Dispersionen, die aliphatische Carbonsäuren mit 12 bis 18 C-Atomen enthalten, verwendet werden.

7. Verwendung nach einem oder beiden der Ansprüche 5 bis 6, dadurch gekennzeichnet, daß Dispersionen, die $C_{6-13}$-Oxoalkohole, alkoxyliert mit 3 bis 5 Mol Ethylenoxid und/oder Propylenoxid, enthalten, verwendet werden.

8. Verwendung nach einem oder mehreren der Ansprüche 5 bis 7, dadurch gekennzeichnet, daß Dispersionen, die 10 bis 60 Gew.-%, vorzugsweise 20 bis 45 Gew.-% der Komponenten A und 0,1 bis 6 Gew.-%, vorzugsweise 0,1 bis 2,5 Gew.-% der Komponenten B enthalten, verwendet werden.

## Claims

1. Aqueous dispersions containing carboxylic acids and/or resinic acids for deinking printed wastepaper, characterized in that the dispersions contain
   A. $C_{6-22}$ carboxylic acids and/or resinic acids and
   B. $C_{6-22}$ oxoalcohols alkoxylated with 2 to less than 6 mol $C_{2-4}$ alkylene oxides.

2. Dispersions as claimed in claim 1, characterized in that the dispersions contain $C_{12-18}$ aliphatic carboxylic acids.

3. Dispersions as claimed in one or both of claims 1 and 2, characterized in that the dispersions contain $C_{6-13}$ oxoalcohols alkoxylated with 3 to 5 mol ethylene oxide and/or propylene oxide.

4. Dispersions as claimed in one or more of claims 1 to 3, characterized in that the dispersions contain 10 to 60% by weight and preferably 20 to 45% by weight of component A and 0.1 to 6% by weight and preferably 0.1 to 2.5% by weight of component B.

5. The use of aqueous dispersions containing
   A. $C_{6-22}$ carboxylic acids and/or resinic acids and
   B. $C_{6-22}$ oxoalcohols alkoxylated with 2 to less than 6 mol $C_{2-4}$ alkylene oxides
   for deinking printed wastepaper.

6. The use claimed in claim 5, characterized in that dispersions containing $C_{12-18}$ aliphatic carboxylic acids are used.

7. The use claimed in one or both of claims 5 and 6, characterized in that dispersions containing $C_{6-13}$ oxoalcohols alkoxylated with 3 to 5 mol ethylene oxide and/or propylene oxide are used.

8. The use claimed in one or more of claims 5 to 7, characterized in that dispersions containing 10 to 60% by weight and preferably 20 to 45% by weight of components A and 0.1 to 6% by weight and preferably 0.1 to 2.5% by weight of component B are used.

## Revendications

1. Dispersions aqueuses contenant des acides carboxyliques et/ou des acides résiniques, pour le désencrage de vieux papiers imprimés, caractérisées en ce que les dispersions contiennent :
   A - des acides carboxyliques en $C_{6-22}$ et/ou des acides résiniques, et
   B - des oxoalcools en $C_{6-22}$ qui sont alcoxylés avec de 2 à moins de 6 moles d'oxydes d'alkylène en $C_{2-4}$.

2. Dispersions selon la revendication 1, caractérisées en ce que les dispersions contiennent des acides carboxyliques aliphatiques ayant de 12 à 18 atomes de carbone.

3. Dispersions selon l'une quelconque des revendications 1 à 2, ou les deux, caractérisées en ce que les dispersions contiennent des oxoalcools en $C_{6-13}$ qui sont alcoxylés avec de 3 à 5 moles d'oxyde d'éthylène et/ou d'oxyde de propylène.

4. Dispersions selon une ou plusieurs des revendications 1 à 3, caractérisées en ce que les dispersions contiennent de 10 à 60 % en poids, de préférence de 20 à 45 % en poids du composant A et de 0,1 à 6 % en poids, de préférence de 0,1 à 2,5 % en poids des composants B.

5. Utilisation de dispersions auqueuses contenant
   A - des acides carboxyliques en $C_{6-22}$ et/ou des acides résiniques, et
   B - des oxoalcools en $C_{6-22}$ qui sont alcoxylés de 2 à moins de 6 moles d'oxydes d'alkylène en $C_{2-4}$,
   pour le désencrage de vieux papiers imprimés.

6. Utilisation selon la revendication 5, caractérisée en ce que l'on utilise des dispersions qui contiennent des acides carboxyliques aliphatiques ayant de 12 à 18 atomes de carbone.

7. Utilisation selon une ou des deux revendications 5 à 6, caractérisée en ce que l'on utilise des dispersions qui contiennent des oxoalcools en $C_{6-13}$ alcoxylés avec de 3 à 5 moles d'oxyde d'éthylène et/ou d'oxyde de propylène.

8. Utilisation selon une ou les deux revendications 5 à 7, caractérisée en ce que l'on utilise des dispersions qui contiennent 10 à 60 % en poids, de préférence 20 à 45 % en poids des composants A et 0,1 à 6 % en poids, de préférence 0,1 à 2,5 % en poids des composants B.